(19) **Europäisches Patentamt**
**European Patent Office**
**Office européen des brevets**

(11) **EP 4 034 329 B1**

(12) **EUROPÄISCHE PATENTSCHRIFT**

(45) Veröffentlichungstag und Bekanntmachung des Hinweises auf die Patenterteilung:
**22.04.2026   Patentblatt 2026/17**

(21) Anmeldenummer: **20775593.5**

(22) Anmeldetag: **15.09.2020**

(51) Internationale Patentklassifikation (IPC):
**B23K 26/0622** *(2014.01)*   **B23K 26/066** *(2014.01)*
**B23K 26/142** *(2014.01)*   **B23K 26/082** *(2014.01)*
**B23K 26/073** *(2006.01)*   **B23K 103/00** *(2006.01)*

(52) Gemeinsame Patentklassifikation (CPC):
**B23K 26/0624; B23K 26/066; B23K 26/0736;**
**B23K 26/082; B23K 26/142;** B23K 2103/50

(86) Internationale Anmeldenummer:
**PCT/EP2020/075716**

(87) Internationale Veröffentlichungsnummer:
**WO 2021/058325 (01.04.2021 Gazette 2021/13)**

(54) **VERFAHREN ZUM HERSTELLEN VON MIKROSTRUKTUREN AN EINEM OPTISCHEN KRISTALL**

METHOD FOR PRODUCING MICROSTRUCTURES ON AN OPTICAL CRYSTAL

PROCÉDÉ POUR PRODUIRE DES MICROSTRUCTURES SUR UN CRISTAL OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2019   DE 102019214684**

(43) Veröffentlichungstag der Anmeldung:
**03.08.2022   Patentblatt 2022/31**

(73) Patentinhaber: **Q.ant GmbH**
**70565 Stuttgart (DE)**

(72) Erfinder:
• **FOERTSCH, Michael**
  **91522 Ansbach (DE)**
• **HENGESBACH, Stefan**
  **70469 Stuttgart (DE)**

• **HOPPE, Louise**
  **70197 Stuttgart (DE)**
• **PRIESTER, Roman**
  **70176 Stuttgart (DE)**
• **SAILER, Marc**
  **78052 Villingen (DE)**
• **SCHAEFER, Marcel**
  **72393 Burladingen (DE)**

(74) Vertreter: **DREISS Patentanwälte PartG mbB**
**Friedrichstraße 6**
**70174 Stuttgart (DE)**

(56) Entgegenhaltungen:
EP-A2- 0 803 747    JP-A- 2009 063 754
US-A1- 2004 252 730    US-A1- 2016 129 526
US-B2- 6 822 190    US-B2- 7 057 135

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zum Herstellen mindestens einer optisch nutzbaren Wellenleiterstruktur an einem (insbesondere nichtlinearen) optischen Kristall, umfassend: Einstrahlen eines gepulsten Laserstrahls auf eine Oberfläche des optischen Kristalls, sowie Bewegen des gepulsten Laserstrahls und des optischen Kristalls relativ zueinander entlang einer Vorschubrichtung zum Abtragen von Material von dem optischen Kristall entlang mindestens einer Ablationsbahn zur Ausbildung der optisch nutzbaren Wellenleiterstruktur. Kristalline Substrate in Form von optischen Kristallen, in die Mikro- und/oder Wellenleiterstrukturen eingebracht werden, können beispielsweise in integrierten Optiken eingesetzt werden und sind eine wichtige Voraussetzung für moderne (quanten-)optische Geräte und Schalter. Herkömmliche Verfahren zur Herstellung solcher Strukturen, wie sie weiter unten beschrieben werden, sind jedoch in ihrer Flexibilität und dem Spektrum der realisierbaren Designs eingeschränkt. Außerdem sind für deren Realisierung aufwändige und teure Prozessketten erforderlich, welche die Entwicklung und Etablierung von konkurrenzfähigen Produkten erschweren.

Für die Herstellung von (Wellenleiter-)Strukturen in optischen Kristallen gibt es unterschiedliche Ansätze. Ein Ansatz besteht darin, die Wellenleiter durch Brechungsindexmodifikation in den optischen Kristall einzuschreiben, wie dies beispielsweise in dem Artikel "High-repetition-rate femtosecond-laser micromachining of low-loss optical-lattice-like-waveguides in lithium niobate", T. Piromjitpong et al., Proc. of SPIE Vol. 10684 (2018) beschrieben ist. Ein weiterer Ansatz besteht darin, Mikrostrukturen durch Laserablation herzustellen.

Beide Ansätze werden in dem Artikel "Optical waveguides in crystalline dielectric materials produced by femtosecond-laser micromachining", Feng Chen et. al., Laser Photonics Rev. 8, No. 2, 2014 beschrieben. Dort ist unter anderem angegeben, dass Stegwellenleiter durch Laserablation hergestellt werden können, indem Rillen in das Substrat eingebracht werden, zwischen deren Seitenwänden der Stegwellenleiter ausgebildet wird. Dort ist auch beschrieben, dass ein Nachteil der auf diese Weise hergestellten Stegwellenleiter darin besteht, dass bei der Laserablation mit Femtosekunden-Laserpulsen raue Seitenwände gebildet werden, welche die Qualität des Stegwellenleiters reduzieren und dessen Verluste erhöhen.

Die Herstellung von Wellenleiterstrukturen in Lithiumniobat(LiNbO$_3$)-Kristallen durch Laserablation wird beispielsweise in dem Artikel "All-laser-micromachining of ridge waveguides in LiNbO3 crystal for mid-infrared band applications", L. Li et al., Scientific Reports 7: 7034 (2017) beschrieben. Dort wird ein Stegwellenleiter in einem Lithiumniobat-Kristall vollständig durch Mikrofabrikation mittels eines Femtosekunden-Lasers hergestellt. Der Stegwellenleiter besteht aus durch Laserablation abgetragenen Seitenwänden in Form von Rillen mit V-förmigen Flanken und einem lasergeschriebenen Boden. Als Laserquelle dient ein Ti:Saphir-Festkörperlaser mit einer Wellenlänge von 796 nm.

In dem Artikel "Ablation of Lithium Niobate with Pico- and Nanosecond Lasers", F. Haehnel, LaserTechnikJournal, Vol. 9, Issue 3, Juni 2012, Seiten 32-35, wird ein Vergleich zwischen Pikosekunden- und Nanosekunden-Laserquellen zur Ablation von Lithiumniobat beschrieben. Bei der Nanosekunden-Laserquelle handelt es sich um einen UV-Excimer-Laser mit einer Wellenlänge von 193 nm bzw. 245 nm. Bei der Pikosekunden-Laserquelle wurde zur Durchführung des Vergleichs eine Wellenlänge von 355 nm (3. Harmonische einer Grundwellenlänge von 1064 nm) mit Pulsdauern von weniger als 12 ps und Wiederholraten zwischen 200 kHz und 1 MHz verwendet. Bei dem Vergleich hat sich herausgestellt, dass die Abtragsrate der Pikosekunden-Laserquelle trotz einer niedrigeren mittleren Leistung deutlich größer war als bei der Excimer-Laserquelle und dass die Rissbildung reduziert war. Die in dem Artikel durchgeführten Untersuchungen erfolgten an Membranen, d.h. optische Bauelemente wurden nicht hergestellt oder charakterisiert.

In der EP 0 803 747 A2 ist ein Verfahren zum Herstellen einer Subtrats beschrieben, das mit einem optischen Wellenleiter in Form eines Stegwellenleiters versehen ist. Der Stegwellenleiter wird durch Laserablation hergestellt, beispielsweise unter Verwendung eines Excimer-Lasers bei Wellenlängen zwischen 150 nm und 300 nm und Pulsdauern im Bereich von Nanosekunden. Der Laserstrahl kann zu diesem Zweck auf eine Oberfläche des Substrats ausgerichtet und über das Substrat bewegt bzw. gescannt werden. Die optische Achse des Laserstrahls ist hierbei vertikal zur Oberfläche des Substrats ausgerichtet. Der Stegwellenleiter sollte ein möglichst rechteckiges Querschnitts-Profil aufweisen, um Lichtverluste zu vermeiden.

Die US 2004/0252730 A1 beschreibt die Bearbeitung von Lithiumniobat durch Laserablation. Es wird vorgeschlagen, die Oberfläche eines Substrats mit einem gepulsten Laserstrahl zu bestrahlen, um Material abzutragen. Der Laser sollte eine Wellenlänge zwischen 310 nm und 370 nm aufweisen. Die Pulsdauer der Laserpulse kann bei ca. 40 ns liegen und die Repetitionsrate kann bei ca. 1000 kHz liegen. Der Laserstrahl und das Substrat können relativ zueinander verschoben werden, um einen Graben mit einer gewünschten Geometrie in dem Lithiumniobat zu erzeugen.

Die US 7057135 B2 zeigt ein Verfahren zum Herstellen mindestens einer optisch nutzbaren Mikrostruktur gemäß dem Oberbegriff von Anspruch 1.

## Aufgabe der Erfindung

Der Erfindung liegt die Aufgabe zugrunde, ein Verfahren zur Herstellung mindestens einer optisch nutzbaren Mikrostruktur, insbesondere einer Wellenleiterstruktur, in einem optischen Kristall durch Laserablation mit Ultrakurzpuls-Laserstrahlung bereitzustellen, welches die Qualität der hergestellten Mikrostruktur(en) verbessert.

Gegenstand der Erfindung

Diese Aufgabe wird durch ein Verfahren gemäß Anspruch 1 gelöst.

Die Erfinder haben erkannt, dass die Qualität der bei der Laserablation hergestellten (optisch nutzbaren) Wellenleiterstrukturen deutlich gesteigert werden kann, wenn die Pulsdauer in der Größenordnung von fs liegt und eine Wellenlänge im grünen Wellenlängenbereich, d.h. zwischen 490 nm und 570 nm, oder darunter, beispielsweise im UV-Wellenlängenbereich mit Wellenlängen von weniger als 380 nm (und in der Regel mehr als 330 nm) verwendet wird. Zwar ist es grundsätzlich bekannt, durch Laserablation Wellenleiterstrukturen z.B. in Form von Stegwellenleitern herzustellen, allerdings nur mit einer unzureichenden Qualität insbesondere hinsichtlich der Rauigkeit der Seitenwände der Stegwellenleiter (vgl. den oben zitierten Artikel von Feng Chen et al.). Dies führt dazu, dass die Wellenleiterstrukturen typischerweise nur zur Führung von Licht im NIR-Wellenlängenbereich verwendet werden können, aber nicht zur Führung von Licht im VIS-Wellenlängenbereich.

Mit Hilfe des hier beschriebenen Verfahrens kann die Rauigkeit der Seitenwände der Wellenleiter reduziert werden. Insbesondere können auch Wellenleiter mit steilen Seitenwänden hergestellt werden. Auf diese Weise können Wellenleiterstrukturen zur Leitung von Licht im VIS und NIR-Wellenlängenbereich sowie zur Erzeugung und Leitung von frequenzkonvertiertem Licht durch nichtlineare optische Prozesse in diesen Frequenzbereichen hergestellt werden. Beispiele hierfür sind parametrische Abwärtskonversion, Summenfrequenz-Erzeugung oder die Erzeugung von höheren Harmonischen. Neben (Licht-)Wellenleitern können auch andere Mikrostrukturen für die Herstellung von integrierten Optiken mit Hilfe des hier beschriebenen Verfahrens hergestellt werden.

Beim Einstrahlen des Laserstrahls auf die Oberfläche des optischen Kristalls kann eine Strahlachse des Laserstrahls senkrecht zur in der Regel planen Oberfläche des optischen Kristalls ausgerichtet sein. In diesem Fall erfolgt typischerweise eine Translationsbewegung einer Lagereinrichtung, beispielsweise in Form einer Translations-Plattform, auf welcher der in der Regel plattenförmige Kristall beim Herstellen der Mikrostrukturen gelagert ist, in einer horizontalen Ebene (parallel zur Oberfläche des optischen Kristalls). Der Laserbearbeitungskopf, aus dem der gepulste Laserstrahl austritt und auf die Oberfläche des optischen Kristalls ausgerichtet wird, kann hierbei ortsfest angeordnet sein, es ist aber auch möglich, dass der Laserbearbeitungskopf über die Oberfläche des optischen Kristalls bewegt wird. Der aus dem Laserbearbeitungskopf austretende Laserstrahl wird in diesem Fall typischerweise auf die Oberfläche des optischen Kristalls fokussiert.

Gemäß der Erfindung wird beim Bewegen des Laserstrahls und des optischen Kristalls relativ zueinander eine Strahlachse des Laserstrahls unter einem Winkel gegenüber einer Normalenrichtung der Oberfläche des optischen Kristalls verkippt, wobei der Winkel bevorzugt in einer Ebene senkrecht zur Vorschubrichtung liegt. Dabei trifft der Laserstrahl nicht senkrecht, sondern unter einem von 0° verschiedenen Winkel auf die Oberfläche des optischen Kristalls. Die Vorschubrichtung der Ablationsbahn, entlang derer das Material abgetragen wird, verläuft in der Regel parallel zur Bearbeitungsebene bzw. zur Oberfläche des Substrats. Der Winkel, unter dem der Laserstrahl zur Normalenrichtung der Oberfläche verkippt wird, liegt typischerweise in einer Ebene, die senkrecht zur (ggf. ortsabhängig variierenden) Vorschubrichtung verläuft. Durch die Ausrichtung unter dem Winkel wird erreicht, dass eine der beiden Seitenwände bzw. Seitenkanten der Ablationsbahn steiler und die andere Seitenwand der Ablationsbahn, die in dem optischen Kristall erzeugt wird, flacher verläuft als dies beim senkrechen Einfall des Laserstrahls auf die Oberfläche der Fall wäre.

Bei einer weiteren Variante liegt der Winkel $\theta$ zwischen 2° und 60°, bevorzugt zwischen 10° und 45°, besonders bevorzugt zwischen 15° und 30°. Es hat sich als günstig erwiesen, den Winkel, unter dem der Laserstrahl zur Normalenrichtung ausgerichtet ist, in dem angegebenen Intervall zu wählen, um zu erreichen, dass eine der beiden Seitenwände der Ablationsbahn möglichst steil, d.h. möglichst parallel zur Normalenrichtung der Oberfläche, ausgerichtet ist. Für den Fall, dass die Seitenwand der Ablationsbahn bzw. des Grabens in dem optischen Kristall die Seitenwand eines Wellenleiters bildet, ist eine möglichst steile Ausrichtung günstig, da auf diese Weise Lichtverluste durch den Austritt von in dem Wellenleiter geführtem Licht durch die Seitenwand hindurch gering gehalten werden können. Durch steile Seitenwände und ein einstellbares Aspektverhältnis von Höhe zu Breite können in dem Wellenleiter rotationssymmetrische Eigenmoden geführt werden. Der Modenüberlapp mit Lichtleitfasern kann dadurch maximiert werden, was eine für (quanten-)optische Aufbauten erforderliche bzw. vorteilhafte große Effizienz gewährleistet.

Für den Fall, dass geradlinige Ablationsbahnen erzeugt werden sollen, ist die Vorschubrichtung bei der Relativbewegung des Laserstrahls und des optischen Kristalls konstant. Die Vorschubrichtung kann ortsabhängig variieren, wenn krummlinige Ablationsbahnen bzw. Mikrostrukturen erzeugt werden sollen. In beiden Fällen sollte sichergestellt sein, dass der Winkel, unter dem der Laserstrahl gegenüber der Normalenrichtung der Oberfläche des optischen Kristalls verkippt wird, unabhängig von der gewählten - ggf. ortsabhängig variierenden - Vorschubrichtung eingestellt werden kann. Bei einem herkömmlichen, ortsfesten Laser-Scanner zur Bearbeitung eines ortsfest angeordneten Werkstücks ist dies typischerweise nicht der Fall, da der Laserstrahl an einer jeweiligen Position an der Oberfläche des Werkstücks unter einem vorgegebenen Scanwinkel ausgerichtet ist.

Bei einer Variante wird zum Verkippen der Strahlachse des Laserstrahls ein Winkel eingestellt, unter dem der Laserstrahl aus einem Laserbearbeitungskopf austritt, und das Bewegen des Laserstrahls und des optischen Kristalls relativ zueinander umfasst eine Translationsbewegung des Laserbearbeitungskopfs und des optischen Kristalls relativ zueinander.

Wie weiter oben beschrieben wurde, ist es für die ortsunabhängige Einstellung des Winkels der Strahlachse des Laserstrahls zur Normalenrichtung der Oberfläche des optischen Kristalls nicht ausreichend, wenn lediglich eine Scanbewegung des Laserstrahls durchgeführt wird. Zusätzlich zur Ausrichtung des Laserstrahls unter einem einstellbaren Winkel beim Austritt aus dem Laserbearbeitungskopf wird daher eine Translationsbewegung bzw. eine relative Verschiebung zwischen dem optischen Kristall und dem Laserbearbeitungskopf durchgeführt. Bei dem Laserbearbeitungskopf, der die Ausrichtung des Laserstrahls unter einem (Scan-)Winkel ermöglicht, kann es sich um ein Trepaniersystem bzw. um eine herkömmlichen Scannereinrichtung handeln, die zwei verkippbare Scannerspiegel, einen in der Regel um zwei Drehachsen kippbaren Scannerspiegel oder eine Kombination aus einem Polygonscanner und einem verkippbaren Scannerspiegel aufweist.

Bei einer weiteren Variante wird zum Verkippen der Strahlachse des Laserstrahls ein Winkel eingestellt, unter dem der Laserstrahl aus einem Laserbearbeitungskopf austritt und das Bewegen des Laserstrahls und des optischen Kristalls relativ zueinander erfolgt mittels einer Scannereinrichtung, wobei der Laserstrahl in bzw. an dem Laserbearbeitungskopf bevorzugt mittels einer telezentrischen Planfeldoptik auf den optischen Kristall fokussiert wird.

Für die Herstellung von insbesondere linienförmigen Wellenleiterstrukturen hat es sich als günstig erwiesen, die Bewegung entlang der Vorschubrichtung mittels eines Scanners, insbesondere mittels eines Polygonscanners, zu realisieren. Auch eine Kombination aus einem Polygonscanner zur Ablenkung des Laserstrahls in Vorschubrichtung, beispielsweise in Y-Richtung, und einem Galvanometer-Scanner zur Ablenkung des Laserstrahls senkrecht zur Vorschubrichtung, beispielsweise in X-Richtung, ist möglich. Der Laserbearbeitungskopf und die Oberfläche des optischen Kristalls können in diesem Fall unter einem (Zustell-)Winkel zueinander ausgerichtet sein, der mechanisch oder elektrisch durch eine Verstelleinrichtung, beispielsweise durch ein Goniometer, angepasst bzw. eingestellt werden kann. Damit neben diesem Zustell-Winkel in der XZ-Ebene kein weiterer Winkel bei der Bearbeitung in der YZ-Ebene zwischen der Oberflächennormalen des optischen Kristalls und der optischen Achse des Laserstrahls auftritt, ist der Einsatz einer telezentrischen Planfeldoptik zur Fokussierung des Laserstrahls auf den optischen Kristall vorteilhaft.

Bei einer weiteren Variante wird zum Verkippen der Strahlachse des Laserstrahls ein Winkel eingestellt, unter dem eine Plattform, auf welcher der optische Kristall gelagert ist, relativ zu einer horizontalen Ebene ausgerichtet ist. Bei der Plattform, auf welcher der optische Kristall gelagert ist, handelt es sich bevorzugt um eine Rotations-/Translationsplattform, welche eine Drehung um mindestens eine Drehachse erlaubt. Grundsätzlich kann die Rotations-/Translationsplattform zur Drehung um mehrere Drehachsen ausgebildet sein, um diese frei im Raum zu orientieren, z.B. in der Art eines Hexapods, Goniometerpaars oder dergleichen.

Bei beiden weiter oben beschriebenen Varianten ist es grundsätzlich möglich, eine freie Bearbeitung eines optischen Kristalls in allen Raumrichtungen durchzuführen, was neuartige Design- und Produktmöglichkeiten eröffnet.

Bei einer weiteren Variante weist der Laserstrahl ein elliptisches Strahlprofil auf, dessen Aspekt-Verhältnis (Länge zu Breite) so gewählt ist, dass der unter dem Winkel zur Normalenrichtung ausgerichtete Laserstrahl mit einem runden Strahlprofil auf die Oberfläche trifft. Es hat sich für den Ablationsprozess als günstig erwiesen, wenn der Laserstrahl, der auf die Oberfläche des optischen Kristalls ausgerichtet wird, ein rundes bzw. rotationssymmetrisches, bevorzugt Gauß-förmiges Strahlprofil aufweist. Wird ein Laserstrahl mit einem runden Strahlprofil unter einem Winkel zur Oberfläche des optischen Kristalls eingestrahlt, so trifft dieser mit einem elliptischen, nicht rotationssymmetrischen Strahlprofil (Spot) auf die Oberfläche. Um dennoch ein rundes Strahlprofil an der Oberfläche zu erzeugen, wird bei dieser Variante ein Laserstrahl mit einem elliptischen Strahlprofil auf die Oberfläche eingestrahlt. Ein solches elliptisches Strahlprofil kann mittels einer strahlformenden Optik, beispielsweise mit Hilfe einer Zylinderlinse bzw. eines Linsenteleskops oder dergleichen, erzeugt werden. Insbesondere kann eine solche strahlformende Optik ausgebildet sein, das Aspekt-Verhältnis des elliptischen Strahlprofils zu verändern.

Für das Aspekt-Verhältnis, welches ein rundes Strahlprofil an der Oberfläche erzeugt, gilt:

$$B / L = \cos (\theta),$$

wobei L die Länge, B die Breite des elliptischen Strahlprofils und θ den Winkel zur Normalenrichtung der Oberfläche bezeichnen. Das elliptische Strahlprofil ist hierbei derart ausgerichtet, dass die kurze Seite (d.h. die Breite B) in der Ebene des Winkels liegt, unter dem die Strahlachse des Laserstrahls zur Normalenrichtung der Oberfläche ausgerichtet ist.

Es kann ggf. günstig sein, wenn das Strahlprofil des Laserstrahls gezielt von einer runden bzw. rotationssymmetrischen Geometrie abweicht, beispielsweise um einen Linienfokus an der Oberfläche des optischen Kristalls zu erzeugen, wie dies z.B. in der WO 2018/019374 A1 beschrieben ist, die durch Bezugnahme in ihrer Gesamtheit zum Inhalt dieser Anmeldung gemacht wird. Ein solcher Linienfokus kann beispielsweise durch die Verwendung von asymmetrischen Moden erzeugt werden. Bei der Verwendung eines Linienfokus kann ebenfalls die Rauigkeit der hergestellten Mikrostrukturen verbessert werden.

Bei einer weiteren Variante werden zum Bilden eines Grabens in dem optischen Kristall der Laserstrahl und der optische Kristall relativ zueinander mehrfach entlang von lateral versetzten Ablationsbahnen bewegt. Zur Bildung der Mikrostrukturen bzw. der Wellenleiter werden in der Regel systematisch mehrere Ablationsbahnen parallel zueinander versetzt.-Die Ablationsbahnen verlaufen entweder geradlinig oder bilden gekrümmte Strukturen in der XY-Ebene auf der Oberfläche des Kristalls bzw. des Wafers. Auf diese Weise können z.B. Mäanderstrukturen oder Taper erzeugt werden. Typischerweise werden mehrere Ablationsbahnen lateral sowie ggf. vertikal, d.h. in Dickenrichtung des optischen Kristalls, überlagert. Auf diese Weise können in dem optischen Kristall Gräben mit einer vorgegebenen Breite und Tiefe erzeugt werden. Abhängig von der gewünschten Geometrie können auch die Laserparameter abhängig von der jeweiligen Ablationsbahn angepasst werden. Wie weiter oben beschrieben wurde, ist es vorteilhaft, zum Bilden der Gräben bzw. zum Herstellen der Ablationsbahnen einen Polygonscanner zu verwenden, welcher die Laserpulse in Vorschubrichtung entlang der Richtung der Gräben ablenkt.

Bei einer weiteren Variante werden ein erster Graben und ein zweiter Graben in dem optischen Kristall gebildet, wobei benachbarte Seitenwände des ersten Grabens und des zweiten Grabens einen vorgegebenen Abstand voneinander aufweisen und die Seitenwände eines Stegwellenleiters bilden. Durch die beiden Gräben, die in einem vorgegebenen (in der Regel konstanten) Abstand zueinander verlaufen, wird eine laterale Begrenzung (Confinement) erzeugt, die es ermöglicht, Licht in dem Stegwellenleiter bzw. in der Wellenleiterstruktur zu führen. Im einfachsten Fall können die Gräben aus einer einzigen Ablationsbahn bestehen, die entlang der Vorschubrichtung verläuft oder die eine Gerade bzw. Kurve mit variierenden Radien beschreibt. In der Regel wird jedoch zum Bilden der Gräben Material entlang von mehreren Ablationsbahnen abgetragen (s.o.). Es hat sich als günstig erwiesen, wenn die Geometrie, in welcher die Ablationsbahnen zur Bildung des ersten und zweiten Grabens abgefahren werden, in Bezug auf die Seitenwände des Stegwellenleiters spiegelsymmetrisch ist, d.h. es wird bei der Bildung beider Gräben entweder zur jeweiligen Seitenwand des Stegwellenleiters hin oder von dieser weg ablatiert.

Bei einer Weiterbildung wird beim Bilden des ersten und zweiten Grabens die Strahlachse des Laserstrahls zumindest entlang von Ablationsbahnen, die benachbart zu einer jeweiligen Seitenwand des Stegwellenleiters verlaufen, unter einem Winkel gegenüber einer Normalenrichtung der Oberfläche des Substrats verkippt, der von der jeweiligen Seitenwand des Stegwellenleiters weg geneigt ist. Unter benachbart zur Seitenwand verlaufenden Ablationsbahnen werden maximal zehn Ablationsbahnen verstanden, die am nächsten benachbart zur Seitenwand des Stegwellenleiters angeordnet sind. Durch die Verkippung der Strahlachse des Laserstrahls von der Seitenwand des Stegwellenleiters weg kann erreicht werden, dass die Seitenwand des Stegwellenleiters möglichst steil verläuft, d.h. möglichst parallel zur Normalenrichtung der Oberfläche des optischen Kristalls.

Der Winkel, unter dem die Strahlachse des Laserstrahls zur Normalenrichtung ausgerichtet ist, kann bei allen Ablationsbahnen eines Grabens konstant sein. In diesem Fall wird in jedem der beiden Gräben eine steile Seitenwand erzeugt, die dem Wellenleiter zugewandt ist. Es ist aber auch möglich, den Winkel, unter dem der Laserstrahl zur Normalenrichtung ausgerichtet ist, entlang der Breite eines jeweiligen Grabens zu variieren. Insbesondere kann der Winkel so verändert werden, dass entlang von Ablationsbahnen, die benachbart zu einer dem Stegwellenleiter abgewandten Seitenwand des Grabens verlaufen, der Winkel zur Normalenrichtung von der dem Stegwellenleiter abgewandten Seitenwand weg geneigt ist. Auf diese Weise kann ein Graben erzeugt werden, der auf beiden Seiten steile Seitenwände bzw. steile Flanken aufweist. Dies kann günstig sein, um weitere Wellenleiterstrukturen bzw. Stegwellenleiter zu bilden. Insbesondere können in diesem Fall der erste und der zweite Graben einen identischen Querschnitt aufweisen.

Bei einer Weiterbildung dieser Variante wird der Laserstrahl beim Bilden eines jeweiligen Grabens auf eine Fokusebene fokussiert, welche der Oberfläche des optischen Kristalls entspricht. Auch eine Nachjustierung der Fokusebene nach dem Abfahren jeder Ablationsbahn auf die Oberfläche des vorher generierten Grabens, d.h. ein schrittweises Absenken der Fokusebene unter die Oberfläche des optischen Kristalls, ist möglich.

Bei einer weiteren Weiterbildung werden an einer Seitenwand des Grabens, die eine Seitenwand des Stegwellenleiters bildet, der Laserstrahl und der optische Kristall mehrmals entlang ein- und derselben Ablationsbahn relativ zueinander bewegt. Auf diese Weise wird eine Glättung der Kante bzw. der Seitenwand erreicht. Beim ersten Abfahren der Ablationsbahn kann ein Satz von Laserparametern eingestellt werden, der für den flächigen Abtrag optimiert ist. Beim zweiten und bei jedem weiteren Abfahren der Ablationsbahn kann ein anderer Satz von Laserparametern eingestellt werden, der für die Glättung optimiert ist. Eine Glättung der Seitenwand ist jedoch nicht zwingend erforderlich und kann je nach Anforderung auch weggelassen werden.

Bei einer weiteren Variante ist der optische Kristall ausgewählt aus der Gruppe umfassend: Lithium-

niobat (LiNbO$_3$), Lithiumtantalat (LiTa), KTP (Kaliumtitanlyphosphat). Wie weiter oben beschrieben wurde, kann in diesen (und anderen) optischen Kristallen sowohl die Erzeugung als auch die Wellenleitung von frequenzkonvertiertem Licht durch nichtlineare optische Prozesse erfolgen. Durch das weiter oben beschriebene Verfahren können in einem solchen optischen Kristall Wellenleiter hergestellt werden, deren Seitenwände eine geringe Rauigkeit von R$_a$ < 40 nm aufweisen. Die geringe Rauigkeit sowie die Herstellung von (annähernd) senkrechten Seitenwänden der Wellenleiter ermöglicht die Führung von Licht auch im sichtbaren Wellenlängenbereich.

Bei einer weiteren Variante weist der optische Kristall eine Brechungsindexstruktur zur planaren Wellenleitung auf und ist insbesondere als LNOI (Lithiumniobate-on-Insulator) oder PELN (proton-exchanged Lithiumniobate) ausgebildet. Das weiter oben beschriebene Verfahren kann insbesondere auf vorbearbeitete optische Kristalle angewendet werden, die eine Brechungsindexstruktur zur planaren Wellenleitung aufweisen, um ein vertikales Confinement des in dem Wellenleiter geführten Lichts zu erzeugen. Bei der Verwendung solcher optischer Kristalle, z.B. bei LNOI, ist darauf zu achten, dass die Tiefe der ablatierten Gräben (annähernd) der Höhe bzw. der Dicke der leitenden Schicht entspricht, da es ansonsten zu Lichtverlusten kommt. Grundsätzlich ist es auch möglich, in einem optischen Kristall, der keine Brechungsindexvariation aufweist, ein vertikales Confinement zu erzeugen, indem mittels des gepulsten Laserstrahls Brechungsindexstrukturen in den optischen Kristall eingebracht werden.

Bei einer weiteren Variante wird der gepulste Laserstrahl von einem Festkörperlaser erzeugt. Festkörperlaser ermöglichen die Erzeugung von Laserpulsen mit geringen Pulsdauern im fs-Bereich. Durch Frequenzverdopplung bzw. Frequenz-Vervielfachung können Festkörperlaser Wellenlängen im grünen Wellenlängenbereich, z.B. bei 515 nm, oder im UV-Wellenlängenbereich, z.B. bei 343 nm, erzeugen. Alternativ ist es ggf. möglich, dass der gepulste Laserstrahl von einem Excimer-Laser erzeugt wird.

Bei einer weiteren Variante umfasst das Verfahren: Zuführen eines Fluids zur Oberfläche des optischen Kristalls zum Abtransportieren von abgetragenem Material. Durch den verbesserten Abtransport des ablatierten Materials kann eine verbesserte Rauigkeit der Seitenwände der Gräben bzw. der Wellenleiterstrukturen erreicht werden. Bei dem Fluid kann es sich beispielsweise um ein in der Regel inertes Prozess-Gas handeln, welches bevorzugt entgegen der Vorschubrichtung über die Oberfläche des optischen Kristalls geführt wird. Alternativ kann es sich bei dem zugeführten Fluid um eine Flüssigkeit handeln. Grundsätzlich ist es möglich, eine Flüssigkeit zwischen dem Laserbearbeitungskopf, aus dem der Laserstrahl austritt, und der Oberfläche des optischen Kristalls einzubringen, um die Spotgröße des Laserstrahls zu verringern.

Als Laserparameter werden für die weiter oben beschriebene Ablation typischerweise Repetitionsraten zwischen ca. 600 kHz und 1000 kHz verwendet. Es ist möglich, dass die Repetitionsrate variiert, d.h. dass kurze, hohe Repetitionsraten gefolgt von langen Pulspausen für die Ablation verwendet werden (Burst-Betrieb). Typische Vorschubgeschwindigkeiten liegen zwischen ca. 500 und 1500 mm/s und sind damit höher als bei herkömmlichen Herstellungsverfahren. Die durchschnittliche Laserleistung liegt in der Größenordnung zwischen ca. 0,5 und 2 Watt, der Energieeintrag pro Laserpuls liegt in der Größenordnung zwischen ca. 0,5 und 5 μJ. Durch den Verzicht auf Masken zur Herstellung der Wellenleiterstrukturen kann zudem eine kostengünstige Prozesskette realisiert werden. Auch wird eine größere Flexibilität gegenüber herkömmlichen Herstellungsverfahren erreicht, so dass auch Wellenleiter mit vergleichsweise komplexen Geometrien auf die weiter oben beschriebene Weise hergestellt werden können. Bei den Wellenleiterstrukturen bzw. den integrierten Optiken kann es sich beispielsweise um optische Koppler, optische Schalter bzw. Logik-Komponenten, etc. handeln.

Bei einer weiteren Variante umfasst das Verfahren: Bewegen des zum Abtragen des Material genutzten, bevorzugt gepulsten Laserstrahls und des optischen Kristalls relativ zueinander, insbesondere im Bereich der Wellenleiterstruktur, zur Erzeugung einer periodischen Polungsstruktur mit Periodenlängen von weniger als 50 μm in dem optischen Kristall. Bei dieser Variante wird der Schritt der periodischen Polung des Materials des optischen Kristalls direkt in die Prozesskette integriert, indem der zur Ablation des Materials verwendete Laserstrahl zur Erzeugung einer Polungsstruktur den optischen Kristall ein- oder mehrmals zusätzlich überfährt. Bei herkömmlichen Verfahren zum Einbringen einer periodischen Polung ist es hingegen erforderlich, dass über Dipole ein elektrisches Feld angelegt wird.

Bei einer Variante umfasst das Verfahren: Belichten des optischen Kristalls durch eine Phasenmaske mit dem zum Abtragen von Material genutzten, bevorzugt gepulsten Laserstrahl, insbesondere im Bereich der Welleneiterstruktur, zur Erzeugung einer periodischen Polungsstruktur mit Periodenlängen von weniger als 10 μm in dem optischen Kristall. Auch in diesem Fall wird der für die Ablation verwendete Laserstrahl zum Einbringen der periodischen Polung in das Material des optischen Kristalls verwendet. Da bei dieser Variante die Polungsstruktur durch die Phasenmaske vorgegeben wird, kann die periodische Polung mit einer kleineren Periodenlänge erzeugt werden als dies bei der weiter oben beschriebenen Variante der Fall ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1    eine schematische Darstellung einer Vorrichtung zur Herstellung von Wellenleiterstrukturen an einem optischen Kristall durch Abtragen von Material zur Ausbildung von mehreren parallel verlaufenden Gräben mittels eines gepulsten Laserstrahls,

Fig. 2    zwei der Gräben von Fig. 1 im Querschnitt bei der Herstellung durch Laserablation,

Fig. 3    eine Darstellung einer Vorrichtung analog zu Fig. 1 mit einem Laserbearbeitungskopf zur Ausrichtung des Laserstahls unter einem Winkel zur Oberfläche des optischen Kristalls,

Fig. 4    eine Darstellung einer Vorrichtung analog zu Fig. 1 mit einer verkippbaren Plattform, auf welcher der optische Kristall gelagert ist,

Fig. 5    eine Darstellung der Laserablation von Material bei der Herstellung eines Stegwellenleiters mit annähernd vertikalen Seitenwänden,

Fig. 6    eine Darstellung eines Laserstrahls mit elliptischem Strahlprofil, der unter einem Winkel zur Normalenrichtung auf die Oberfläche des optischen Kristalls eingestrahlt wird, sowie

Fig. 7    eine Darstellung eines optischen Kopplers mit zwei Stegwellenleitern, die durch Laserablation erzeugt wurden.

In der folgenden Beschreibung der Zeichnungen werden für gleiche bzw. funktionsgleiche Bauteile identische Bezugszeichen verwendet.

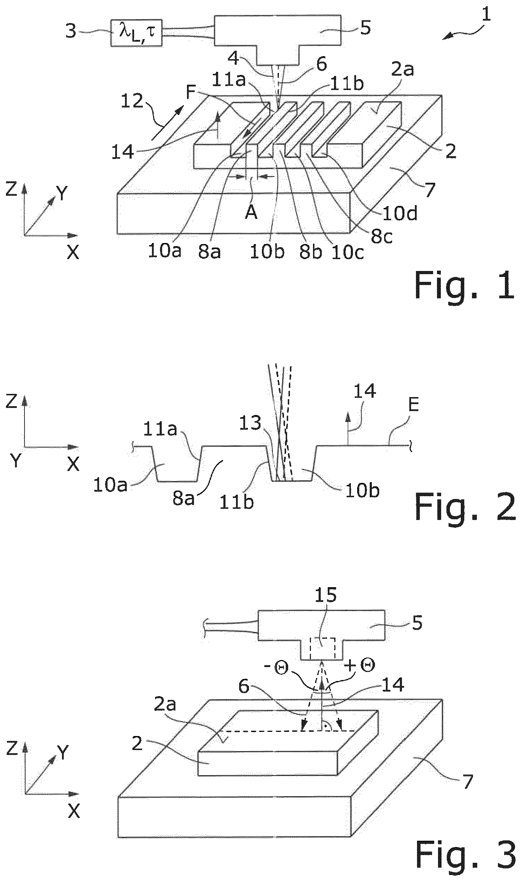

Fig. 1 zeigt einen beispielhaften Aufbau einer Vorrichtung 1 zur Herstellung von Mikrostrukturen an einem Substrat in Form eines optischen Kristalls 2, z.B. in Form eines Wafers. Die Vorrichtung 1 umfasst eine Laserquelle 3 zur Erzeugung eines Laserstrahls 4, der über eine in Fig. 1 angedeutete Strahlführung einem Laserbearbeitungskopf 5 zugeführt wird. Der Laserbearbeitungskopf 5 richtet den Laserstrahl 4 auf den optischen Kristall 2 aus, und zwar auf eine Oberfläche 2a des optischen Kristalls 2, welche im gezeigten Beispiel die plane Oberseite des optischen Kristalls 2 bildet.

Bei der Laserquelle 3 handelt es sich bei dem in Fig. 1 gezeigten Beispiel um einen Festkörperlaser, der zur Erzeugung des Laserstrahls 4 bei einer Wellenlänge $\lambda_L$ zwischen 330 nm und 570 nm (bzw. 550 nm) ausgebildet ist. Die Laserquelle 3 kann beispielsweise ausgebildet sein, den Laserstrahl 4 bei einer Wellenlänge $\lambda_L$ von 343 nm, d.h. im UV-Wellenlängenbereich, oder von 532 nm, d.h. im grünen Wellenlängenbereich, zu erzeugen. Bei dem Festkörpermedium der Laserquelle 3 kann es sich beispielsweise um Yb:YAG handeln. Die Laserquelle 3 ist ausgebildet, einen gepulsten Laserstrahl 4 mit Pulsdauern im ps- bzw. fs-Bereich zu erzeugen. Für das nachfolgend beschriebene Verfahren haben sich Pulsdauern $\tau$ von weniger als 5 ps, beispielsweise von weniger als 850 fs, insbesondere von weniger als 500 fs, ggf. von weniger als 300 fs als vorteilhaft erweisen.

Bei der Laserquelle 3, die zur Erzeugung eines gepulsten Laserstrahls 4 mit derartigen Pulsdauern ausgebildet ist, kann es sich beispielsweise um einen Scheiben-, Slab- oder Faserlaser handeln. Alternativ kann ggf. ein Excimer-Laser verwendet werden, auch wenn dieser in der Regel nicht geeignet ist, um Pulsdauern im fs-Bereich zu erzeugen.

Der gepulste Laserstrahl 4 wird auf die dem Laserbearbeitungskopf 5 zugewandte Oberfläche 2a des optischen Kristalls 2 eingestrahlt. Wie in Fig. 1 zu erkennen ist, ist eine Strahlachse 6 des Laserstrahls 4 senkrecht zur Oberfläche 2a des optischen Kristalls 2 ausgerichtet, die im gezeigten Beispiel die Bearbeitungsebene bildet. Der optische Kristall 2 ist auf einer Translations-Plattform 7 gelagert, die mit Hilfe von nicht bildlich dargestellten Aktuatoren in X-Richtung sowie unabhängig davon in Y-Richtung sowie in Z-Richtung eines XYZ-Koordinatensystems verschoben werden kann. Die Translations-Plattform 7 kann auch um eine in Z-Richtung ausgerichtete Drehachse gedreht werden.

Wie in Fig. 1 zu erkennen ist, werden bei der materialabtragenden Bearbeitung des optischen Kristalls 2 mittels des gepulsten Laserstrahls 4 Mikrostrukturen in Form von drei parallel ausgerichteten, in Y-Richtung verlaufenden Wellenleiterstrukturen in Form von Stegwellenleitern 8a-c gebildet, die einen im Wesentlichen rechteckigen Querschnitt aufweisen. Zu diesem Zweck werden mittels des gepulsten Laserstrahls 4 vier parallel ausgerichtete, sich ebenfalls in Y-Richtung erstreckende Gräben 10a-d in den optischen Kristall 2 eingebracht. Die drei Stegwellenleiter 8a-c sind jeweils zwischen zwei benachbarten Gräben 10a-d angeordnet.

Wie in Fig. 1 beispielhaft für den ersten Stegwellenleiter 8a dargestellt ist, weisen der erste Graben 10a und der benachbarte zweite Graben 10b einen vorgegebenen, konstanten Abstand A zueinander auf, der im gezeigten Beispiel am Boden der beiden Gräben 10a,b gemessen wird und der beispielsweise bei ca. 15 $\mu$m liegen kann. Eine rechte Seitenwand 11a des ersten Grabens 10a und eine benachbarte, dem ersten Graben 10a zugewandte linke Seitenwand 11b des zweiten Grabens 10b bilden die Seitenwände 11a, 11b des ersten Stegwellenleiters 8a. Entsprechendes gilt für die Gräben 10b-d und den zweiten und dritten Stegwellenleiter 8b, 8c.

Um die Gräben 10a-d zu erzeugen und auf diese Weise die Stegwellenleiter 8a-c zu bilden, werden der gepulste Laserstrahl 4 und der optische Kristall 2 relativ zueinander bewegt. Der Laserbearbeitungskopf 5 ist bei dem in Fig. 1 gezeigten Beispiel ortsfest angeordnet. Zum Erzeugen einer Bewegung des gepulsten Laserstrahls 4 und des optischen Kristalls 2 relativ zueinander wird daher die Translations-Plattform 7 entlang einer Vorschubrichtung 12 bewegt, die der Y-Richtung des XYZ-Koordinatensystems entspricht. Der gepulste Laserstrahl 4 wird hierbei zur Erzeugung eines jeweiligen Grabens 10a-d mehrfach entlang von lateral (d.h. in X-Richtung) versetzten Ablationsbahnen 13 bewegt, wie dies beispielhaft in Fig. 2 für den zweiten Graben 10b dargestellt ist. Es versteht sich, dass die Bewegung des optischen Kristalls 2 entlang einer jeweiligen Ablationsbahn 13 in positiver Y-Richtung erfolgen kann und die benachbarte Ablationsbahn 13 in negativer Y-Richtung abgefahren wird, um den Ablationsprozess zu beschleunigen.

Wie in Fig. 1 durch einen Pfeil angedeutet ist, kann der Oberfläche 2a des optischen Kristalls 2 ein Fluid F zugeführt werden, welches im gezeigten Beispiel einen Gasstrom aus einem inerten Gas, z.B. Stickstoff, bildet. Der Gasstrom bzw. das Fluid F ist in Fig. 1 entgegen der Vorschubrichtung 12 ausgerichtet, um abgetragenes bzw. ablatiertes Material abzutransportieren. Der Gasstrom kann beispielsweise mit Hilfe einer an dem Laserbearbeitungskopf 5 angebrachten Düse erzeugt werden.

Bei dem in Fig. 1 gezeigten Beispiel werden jeweils ca. siebzig Ablationsbahnen 13 in X-Richtung lateral versetzt, um einen jeweiligen Graben 10a-d zu bilden, von denen in Fig. 2 zwei benachbarte Ablationsbahnen 13 gezeigt sind. Der laterale Versatz zwischen zwei benachbarten Ablationsbahnen 13 beträgt im gezeigten Beispiel ca. 3 $\mu$m. Der gepulste Laserstahl 4 wird mittels einer nicht bildlich dargestellten, in dem Laserbearbeitungskopf 5 angeordneten Fokussiereinrichtung, beispielsweise in Form einer Fokussierlinse, auf den optischen Kristall 2 fokussiert, und zwar in einer Fokusebene E, die bei dem in Fig. 2 gezeigten Beispiel ungefähr mit der Oberfläche 2a des optischen Kristalls 2 übereinstimmt. Bei dem in Fig. 2 gezeigten Beispiel beträgt der (minimale) Fokusdurchmesser des Laserstrahls 4 ca. 17 $\mu$m.

Die Parameter des gepulsten Laserstrahls 4 sind für einen flächigen Abtrag des Materials des optischen Kristalls 2 optimiert. Es versteht sich aber, dass es ausreichend sein kann, wenn zur Bildung eines Grabens 10a-d der Laserstrahl 4 nur entlang einer einzigen Ablationsbahn 13 in Vorschubrichtung 12 bewegt wird. Um die Tiefe eines jeweiligen Grabens 10a-d zu vergrößern, kann der weiter oben beschriebene Vorgang des Abtragens von Material entlang von mehreren lateral versetzten Ablationsbahnen 13 ggf. mehrfach wiederholt werden, so dass die Ablationsbahnen 13 vertikal übereinander liegen. Auf diese Weise kann ein jeweiliger Graben 10a-d mit einer gewünschten Breite und Tiefe erzeugt werden.

Um die in Fig. 2 gezeigte Seitenwand 11b des zweiten Grabens 10b, welche die (rechte) Seitenwand des ersten Stegwellenleiters 8a bildet, zu glätten, werden der optische Kristall 2 und der Laserstrahl 4 mehrmals, z.B. mindestens fünf Mal, entlang ein- und derselben Ablationsbahn 13 in Vorschubrichtung 12 zueinander bewegt. Hierbei können die Laserparameter, beispielsweise die Pulsdauer $\tau$, die Vorschubgeschwindigkeit, die (durchschnittliche) Leistung, etc. beim ersten Abfahren der Ablationsbahn 13 sich von den Laserparametern unterscheiden, die beim zweiten, dritten, ... Abfahren der Ablationsbahn 13 verwendet werden: Die Laserparameter beim ersten Abfahren der Ablationsbahn 13 sind hierbei für den flächigen Abtrag optimiert, während die Laserparameter beim zweiten, dritten, ... Abfahren der Ablationsbahn 13 für das Glätten der Seitenwand 11b des Stegwellenleiters 8a optimiert sind.

Wie in Fig. 2 zu erkennen ist, verlaufen die Seitenwände 11a,b des Stegwellenleiters 8a, der auf die weiter oben beschriebene Weise hergestellt wurde, nicht exakt senkrecht zur Oberfläche 2a des optischen Kristalls 2, sondern sind geringfügig zur Vertikalen bzw. zur Normalenrichtung 14 der Oberfläche 2a des optischen Kristalls 2 geneigt.

Um Stegwellenleiter 8a-c mit möglichst steilen Seitenflächen 11a,b zu erzeugen, wie sie in Fig. 1 dargestellt sind, hat es sich als günstig erwiesen, bei der Ablation bzw. beim Bewegen des gepulsten Laserstrahls 4 und des optischen Kristalls 2 relativ zueinander die Strahlachse 6 des Laserstrahls 4 unter einem Winkel $\theta$ gegenüber der Normalenrichtung 14 der Oberfläche 2a des optischen Kristalls 2 zu verkippen, und zwar im gezeigten Beispiel quer zur Vorschubrichtung 12, d.h. in der XZ-Ebene.

Um dies zu erreichen, kann der Laserbearbeitungskopf 5 eine Scannereinrichtung 15 aufweisen, die es ermöglicht, einen (Scan-)Winkel $\theta$ einzustellen, unter dem der Laserstrahl 4 aus dem Laserbearbeitungskopf 5 austritt, wie dies beispielhaft in Fig. 3 dargestellt ist. Die Scannereinrichtung 15 (Trepaniersystem) weist in der Regel zwei unabhängig voneinander verkippbare Scanner-Spiegel, einen um zwei Drehachsen drehbaren Scanner-Spiegel oder eine Kombination aus einem Polygonscanner und einem drehbaren Spiegelscanner bzw. Scanner-Spiegel auf, um den Scanwinkel $\theta$ nicht nur in der XZ-Ebene einstellen zu können, wie dies in Fig. 3 dargestellt ist, sondern den Laserstrahl 6 beim Austritt aus dem Laserbearbeitungskopf 5 beliebig zu orientieren bzw. auszurichten. Die Scannereinrichtung 15 kann beispielsweise einen Polygonscanner aufweisen, um den Laserstrahl 4 in der YZ-Ebene zur Bildung der Gräben 10a-d entlang der Vorschubrichtung 12 abzulenken. In diesem Fall ist es günstig, wenn in dem Laserbearbeitungskopf 5 eine Fokussiereinrichtung in Form einer telezentrischen Planfeldoptik angeordnet ist, um den Laserstrahl 4 nach der Ablenkung auf den optischen Kristall 2 zu fokussieren.

Durch die Möglichkeit, den optischen Kristall 2 mit Hilfe der Translations-Plattform 7 in X-Richtung und Y-Richtung zu verschieben, kann für jede Orientierung der Vorschubrichtung 12 in der XY-Ebene der Scanwinkel θ unabhängig von dem Ort eingestellt werden, an dem der Laserstrahl 4 auf der Oberfläche 2a des optischen Kristalls 2 auftrifft. Dies ist günstig, da der Scanwinkel θ, unter dem die Strahlachse 6 des Laserstrahls 4 relativ zur Normalenrichtung 14 der Oberfläche 2a des optischen Kristalls 2 ausgerichtet ist, in der Regel in einer Ebene senkrecht zur Vorschubrichtung 12 ausgerichtet werden sollte, wie weiter unten näher beschrieben ist. In Fig. 3 sind beispielhaft zwei Scanwinkel -θ, + θ gezeigt, unter denen die Strahlachse 6 des Laserstrahls 4 in der XZ-Ebene relativ zur Normalenrichtung 14 ausgerichtet werden kann.

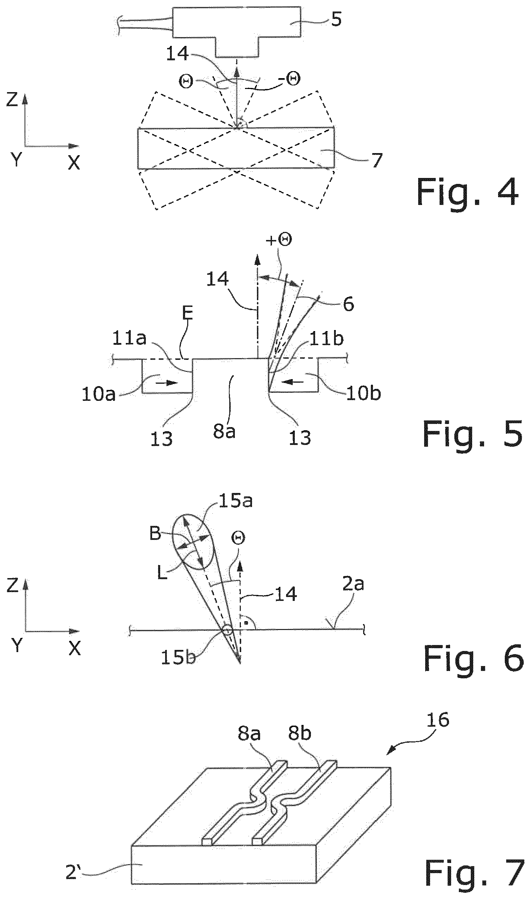

**Fig.** 4 zeigt eine weitere Möglichkeit, um den Laserstrahl 4 unter einem Winkel θ zur Normalenrichtung 14 des optischen Kristalls 2 auszurichten: In diesem Fall handelt es sich bei der Plattform 7, auf welcher der optische Kristall 2 gelagert ist, um eine Translations-/Rotations-Plattform, die unter einem Winkel θ zur einer horizontalen Ebene (XY-Ebene) verkippt werden kann. Die Translations-/Rotations-Plattform 7 kann typischerweise um mehr als eine Drehachse verkippt werden. Auf diese Weise ist es möglich, die Ebene, in welcher der Winkel θ liegt, in Abhängigkeit von der jeweils gewählten Vorschubrichtung 12 zu verändern. Insbesondere kann es sich bei der Translations-/Rotations-Plattform 7 um einen Hexapod, ein Goniometer oder dergleichen handeln.

Es versteht sich, dass die beiden in Fig. 3 und Fig. 4 beschriebenen Möglichkeiten zur Einstellung des Winkels θ, unter dem die Strahlachse 6 des Laserstrahls 4 zur Normalenrichtung 14 ausgerichtet wird, ggf. kombiniert werden können.

Um die in Fig. 1 gezeigten Wellenleiter 8a-c mit möglichst steil ansteigenden Seitenflächen 11a,b zu erzeugen, kann die in Zusammenhang mit Fig. 1 beschriebene Ablation von Material zur Herstellung der Gräben 10a-d durchgeführt werden. Im Gegensatz zu dem oben beschriebenen Verfahren wird die Strahlachse 6 des Laserstrahls 4 während des Bildens eines jeweiligen Grabens 10a-d zumindest entlang von Ablationsbahnen 13, die benachbart zu einer Seitenwand 11a,b eines jeweiligen Stegwellenleiters 8a, 8b, ... verlaufen, unter einem Winkel -θ, +θ zur Normalenrichtung 14 der Oberfläche 2a des optischen Kristalls 2 verkippt, der von der jeweiligen Seitenwand 11a,b weg geneigt ist, wie dies beispielhaft in Fig. 5 für den ersten Stegwellenleiter 8a dargestellt ist.

Um möglichst steile, senkrecht zur Oberfläche 2a des optischen Kristalls 2 ausgerichtete Seitenwände 11a,b zu erzeugen, hat es sich als günstig erwiesen, wenn der Winkel θ zwischen 2° und 60°, bevorzugt zwischen 10° und 45°, insbesondere zwischen 15° und 30° liegt. Wie bei dem in Fig. 2 gezeigten Beispiel wird der Laserstrahl 4 auch bei dem in Fig. 5 gezeigten Beispiel auf eine Fokusebene E fokussiert, die mit der Oberfläche 2a des optischen Kristalls 2 übereinstimmt. Die Glättung der jeweiligen Seitenwände 11a,b kann auf die weiter oben in Zusammenhang mit Fig. 1 beschriebene Weise erfolgen. Auch eine Nachjustierung der Fokusebene E nach dem Abfahren jeder Ablationsbahn 13 auf die Oberfläche des vorher generierten Grabens bzw. des vorher abgetragenen Materials, d.h. ein schrittweises Absenken der Fokusebene unter die Oberfläche 2a des optischen Kristalls 2, ist möglich.

Der Winkel θ, unter dem der Laserstrahl 4 zur Normalenrichtung 14 ausgerichtet ist, kann bei allen Ablationsbahnen 13 eines jeweiligen Grabens 10a,b gleich, d.h. konstant, sein, es ist aber auch möglich, dass der Winkel θ in lateraler Richtung variiert. Beispielsweise kann der Winkel θ bei Ablationsbahnen 13 in der Nähe der Seitenwände des jeweiligen Grabens 10a,b, die dem Stegwellenleiter 8a abgewandt sind, entgegengesetzt zur Darstellung von Fig. 5 ausgerichtet sein, um auch dort möglichst steile Seitenwände zu erzeugen.

Wie in Fig. 5 durch Pfeile angedeutet ist, werden die Ablationsbahnen 13 in den beiden Gräben 10a,b in einer Reihenfolge erzeugt, die vom der der Seitenwand 11a,b des Stegwellenleiters 8a abgewandten Seite zur der Seitenwand 11a,b des Stegwellenleiters 8a zugewandten Seite des jeweiligen Grabens 10a,b verläuft. Eine solche Ablationsreihenfolge hat sich ebenso wie eine Ablationsreihenfolge, in der in beiden Gräben 10a,b von der den beiden Seitenwänden 11a,b des Stegwellenleiters 8a ausgehend zur gegenüberliegenden Seite des Grabens 10a,b ablatiert werden, als vorteilhaft herausgestellt.

Weist der Laserstrahl 4 ein kreisförmiges Strahlprofil auf und wird dieser unter einem Winkel θ zur Normalenrichtung 14 der Oberfläche 2a des optischen Kristalls 2 ausgerichtet, so trifft dieser mit einem elliptischen Strahlprofil auf die Oberfläche 2a des optischen Kristalls 2 auf. Für die Ablation hat es sich jedoch als günstig erwiesen, wenn der Laserstrahl 4 mit einem möglichst rotationssymmetrischen, typischerweise Gauß-förmigen Strahlprofil auf die Oberfläche 2a des optischen Kristalls 2 auftrifft. Um zu gewährleisten, dass der Laserstrahl 4 auch bei der Ausrichtung unter einem Winkel θ zur Normalenrichtung 14 mit einem kreisförmigen Strahlprofil 15b auf die Oberfläche 2a auftrifft, wie dies in Fig. 6 dargestellt ist, ist es günstig, wenn der Laserstrahl 4 mit einem elliptischen Strahlprofil 15a erzeugt wird, dessen Aspekt-Verhältnis, d.h. das Verhältnis aus Länge L zu Breite B, so gewählt ist, dass der Laserstrahl 4 mit dem kreisförmigen Strahlprofil 15b auf die Oberfläche 2a auftrifft.

Für das Aspekt-Verhältnis des elliptischen Strahlprofils 15a, welches ein rundes Strahlprofil 15b an der Oberfläche 2a erzeugt, gilt:

$$B \, / \, L = \cos{(\theta)}.$$

Die kurze Seite, d.h. die Breite B des elliptischen Strahlprofils 15a, liegt hierbei in der XZ-Ebene, in der auch der Winkel θ sich befindet.

**Fig.** 7 zeigt eine integrierte Optik in Form eines optischen Koppers 16, der zwei Stegwellenleiter 8a,b aufweist, die auf die weiter oben beschriebene Weise durch Laserablation hergestellt wurden, indem das umgebende Material abgetragen wurde, so dass außer den beiden Stegwellenleitern 8a,b nur noch eine Isolator-Schicht 2' verblieben ist. Bei dem optischen Kristall 2, aus dem die Stegwellenleiter 8a,b gebildet wurden, handelt es sich im gezeigten Beispiel um LNOI, d.h. um $LiNbO_3$, das auf der Isolator-Schicht 2' aufgebracht ist. Durch die Isolator-Schicht 2' wird ein vertikales Confinement der Stegwellenleiter 8a,b erzeugt. Wie in Fig. 7 zu erkennen ist, sind die Stegwellenleiter 8a,b nicht geradlinig, sondern weisen einen gekrümmten Abschnitt auf, um die optische Kopplung zu bewirken. Derartige und andere Wellenleiter-Geometrien, die nicht geradlinig verlaufen, können mit Hilfe des weiter oben beschriebenen Verfahrens hergestellt werden.

Der zum Abtrag von Material von dem optischen Kristall 2 genutzte Laserstrahl 4 kann auch dazu verwendet werden, eine periodische Polung bzw. eine periodische Polungsstruktur in dem optischen Kristall 2 zu erzeugen. Unter einer periodischen Polung wird eine periodische Inversion der Orientierung der (nichtlinearen) Polarisation des (nichtlinearen) optischen Kristalls 2 verstanden, so dass Bereiche bzw. Domänen mit entgegengesetzter Polarisation entstehen. Eine solche periodische Polungsstruktur mit einer Periodenlänge von weniger als z.B. 50 $\mu$m kann in dem optischen Kristall 2 erzeugt werden, indem der Laserstrahl 4 und der optische Kristall, typischerweise im Bereich der Wellenleiterstruktur(en) 8a-c, relativ zueinander bewegt werden. Die Bewegung erfolgt bevorzugt entlang von einer oder mehreren Bahnen, entlang derer der optische Kristall 2 mit dem Laserstrahl 4 überfahren wird, um die periodische Polungsstruktur zu erzeugen.

Eine periodische Polungsstruktur in dem optischen Kristall 2 kann auch erzeugt werden, wenn der optische Kristall 2 durch eine Phasenmaske hindurch mit dem zum Abtragen von Material genutzten Laserstrahl 4 belichtet bzw. bestrahlt wird, wobei die Bestrahlung typischerweise zumindest im Bereich der Wellenleiterstrukturen 8a-c erfolgt. Bei der Verwendung einer Phasenmaske können typischerweise periodische Polungsstrukturen mit geringeren Periodenlängen erzeugt werden, beispielsweise mit Periodenlängen von weniger als 10 $\mu$m.

Es versteht sich, dass Wellenleiterstrukturen 8a-c auf die weiter oben beschriebene Weise auch in anderen optischen Kristallen 2 als in Lithiumniobat erzeugt werden können, beispielsweise in LiTa, KTP, etc. Diese und andere optische Kristalle 2 können bereits vor der Bearbeitung eine Brechungsindexstruktur aufweisen, die zur planaren Wellenleitung dient, z.B. in Form von PELN. Auch auf andere Weise vorbehandelte optische Kristalle 2 können mittels des weiter oben beschriebenen Verfahrens bearbeitet werden, um Mikro- bzw. Wellenleiterstrukturen herzustellen.

**Patentansprüche**

1. Verfahren zum Herstellen mindestens einer optisch nutzbaren Mikrostruktur an einem optischen Kristall (2), umfassend:

   Einstrahlen eines gepulsten Laserstrahls (4) auf eine Oberfläche (2a) des optischen Kristalls (2), Bewegen des gepulsten Laserstrahls (4) und des optischen Kristalls (2) relativ zueinander entlang einer Vorschubrichtung (12) zum Abtragen von Material des optischen Kristalls (2) entlang mindestens einer Ablationsbahn (13) zur Ausbildung der optisch nutzbaren Mikrostruktur, wobei
   der gepulste Laserstrahl (4) mit Pulsdauern ($\tau$) von weniger als 5 ps, bevorzugt von weniger als 850 fs, besonders bevorzugt von weniger als 500 fs,
   insbesondere von weniger als 300 fs und mit einer Wellenlänge ($\lambda_L$) von weniger als 570 nm, bevorzugt von weniger als 380 nm, auf die Oberfläche (2a) des optischen Kristalls (2) eingestrahlt wird,
   **dadurch gekennzeichnet,**
   **dass** beim Bewegen des gepulsten Laserstrahls (4) und des optischen Kristalls (2) relativ zueinander eine optisch nutzbare Mikrostruktur in Form einer Wellenleiterstruktur (8a-c), insbesondere in Form eines Stegwellenleiters, ausgebildet wird, und
   **dass** beim Bewegen des gepulsten Laserstrahls (4) und des optischen Kristalls (2) relativ zueinander eine Strahlachse (6) des Laserstrahls (4) unter einem Winkel ($\theta$) gegenüber einer Normalenrichtung (14) der Oberfläche (2a) des optischen Kristalls (2) verkippt wird.

2. Verfahren nach Anspruch 1, bei dem der Winkel ($\theta$) in einer Ebene (XZ) senkrecht zur Vorschubrichtung (12) verläuft.

3. Verfahren nach Anspruch 2, bei dem der Winkel ($\theta$) zwischen 2° und 60°, bevorzugt zwischen 10° und 45°, besonders bevorzugt zwischen 15° und 30° liegt.

4. Verfahren nach einem der Ansprüche 2 oder 3, bei dem zum Verkippen der Strahlachse (6) des Laserstrahls (4) ein Winkel ($\theta$) eingestellt wird, unter dem der Laserstrahl (4) aus einem Laserbearbeitungskopf (5) austritt, und bei dem das Bewegen des Laserstrahls (4) und des optischen Kristalls (2) relativ zueinander eine Verschiebung des Laserbearbeitungskopfs (5) und des optischen Kristalls (2) relativ zueinander umfasst.

5. Verfahren nach einem der Ansprüche 2 bis 4, bei dem zum Verkippen der Strahlachse (6) des Laserstrahls (4) ein Winkel (θ) eingestellt wird, unter dem der Laserstrahl (4) aus einem Laserbearbeitungskopf (5) austritt, und bei dem das Bewegen des Laserstrahls (4) und des optischen Kristalls (2) relativ zueinander mittels einer Scannereinrichtung (15) erfolgt, wobei der Laserstrahl (4) in dem Laserbearbeitungskopf (5) bevorzugt mittels einer telezentrischen Planfeldoptik auf den optischen Kristall (2) fokussiert wird.

6. Verfahren nach einem der Ansprüche 2 bis 5, bei dem zum Verkippen der Strahlachse (14) des Laserstrahls (4) ein Winkel (θ) eingestellt wird, unter dem eine Plattform (7), auf welcher der optische Kristall (2) gelagert ist, relativ zu einer horizontalen Ebene (XY) ausgerichtet ist.

7. Verfahren nach einem der Ansprüche 2 bis 6, bei dem der Laserstrahl (4) ein elliptisches Strahlprofil (15a) aufweist, dessen Aspekt-Verhältnis (L / B) so gewählt ist, dass der unter dem Winkel (θ) zur Normalenrichtung (14) ausgerichtete Laserstrahl (4) mit einem runden Strahlprofil (15b) auf die Oberfläche (2a) trifft.

8. Verfahren nach einem der vorhergehenden Ansprüche, bei dem zum Bilden eines Grabens (10a-d) in dem optischen Kristall (2) der Laserstrahl (4) und der optische Kristall (2) relativ zueinander mehrfach entlang von lateral versetzten Ablationsbahnen (13) bewegt werden.

9. Verfahren nach einem der vorhergehenden Ansprüche, bei dem ein erster Graben (10a) und ein zweiter Graben (10b) in dem optischen Kristall (2) gebildet werden, wobei benachbarte Seitenwände (11a,b) des ersten Grabens (10a) und des zweiten Grabens (10b) einen vorgegebenen Abstand (A) voneinander aufweisen und die Seitenwände (11a,b) eines Stegwellenleiters (8a) bilden.

10. Verfahren nach Anspruch 9, bei dem beim Bilden des ersten und zweiten Grabens (10a,b) zumindest entlang von Ablationsbahnen (13), die benachbart zu einer jeweiligen Seitenwand (11a,b) des Stegwellenleiters (8a) verlaufen, die Strahlachse (6) des Laserstrahls (4) unter einem Winkel (-θ, +θ) gegenüber einer Normalenrichtung der Oberfläche (2a) des optischen Kristalls (2) verkippt wird, der von der jeweiligen Seitenwand (11a,b) des Stegwellenleiters (8a) weg geneigt ist.

11. Verfahren nach Anspruch 10, bei dem der Laserstrahl (4) beim Bilden eines jeweiligen Grabens (10a,b) auf eine Fokusebene (E) fokussiert wird, die sich an der Oberseite (2a) des optischen Kristalls (2) befindet.

12. Verfahren nach einem der Ansprüche 9 bis 11, bei dem an einer Seitenwand (11a,b) des Grabens (10a,b), die eine Seitenwand (11a,b) des Stegwellenleiters (8a) bildet, der Laserstrahl (4) und der optische Kristall (2) mehrmals entlang ein- und derselben Ablationsbahn (13) relativ zueinander bewegt werden.

13. Verfahren nach einem der vorhergehenden Ansprüche, bei dem der optische Kristall (2) ausgewählt ist aus der Gruppe umfassend: $LiNbO_3$, LiTa, KTP.

14. Verfahren nach einem der vorhergehenden Ansprüche, bei dem der optische Kristall (2) eine Brechungsindexstruktur aufweist, insbesondere als LNOI oder PELN ausgebildet ist.

15. Verfahren nach einem der vorhergehenden Ansprüche, weiter umfassend: Zuführen eines Fluids (F) zur Oberfläche (2a) des optischen Kristalls (2) zum Abtransportieren von abgetragenem Material.

**Claims**

1. Method for producing at least one optically usable microstructure on an optical crystal (2), comprising:

   irradiating a pulsed laser beam (4) onto a surface (2a) of the optical crystal (2),
   moving the pulsed laser beam (4) and the optical crystal (2) relative to each other along a feed direction (12) to remove material from the optical crystal (2) along at least one ablation path (13) to form the optically usable microstructure, wherein
   the pulsed laser beam (4) with pulse durations (τ) of less than 5 ps, preferably less than 850 fs, particularly preferably less than 500 fs, in particular less than 300 fs and with a wavelength ($\lambda_L$) of less than 570 nm, preferably of less than 380 nm, is irradiated onto the surface (2a) of the optical crystal (2),
   **characterized**
   **in that** when the pulsed laser beam (4) and the optical crystal (2) are moved relative to each other, an optically usable microstructure in the form of a waveguide structure (8a-c), in particular in the form of a ridge waveguide, is formed, and
   **in that** when the pulsed laser beam (4) and the optical crystal (2) are moved relative to each other, a beam axis (6) of the laser beam (4) is tilted at an angle (θ) to a normal direction (14) of the surface (2a) of the optical crystal (2).

2. Method according to claim 1, wherein the angle (θ) is in a plane (XZ) perpendicular to the feed direction (12).

3. Method according to claim 2, wherein the angle (θ) is between 2° and 60°, preferably between 10° and 45°, particularly preferably between 15° and 30°.

4. Method according to any of claims 2 or 3, wherein an angle (θ) is set to tilt the beam axis (6) of the laser beam (4) at which angle the laser beam (4) emerges from a laser processing head (5), and wherein the movement of the laser beam (4) and the optical crystal (2) relative to each other comprises a displacement of the laser processing head (5) and the optical crystal (2) relative to each other.

5. Method according to any of claims 2 to 4, wherein an angle (θ) is set to tilt the beam axis (6) of the laser beam (4) at which angle the laser beam (4) emerges from a laser processing head (5), and wherein the laser beam (4) and the optical crystal (2) are moved relative to each other by means of a scanner device (15), wherein the laser beam (4) is focused in the laser processing head (5), preferably by means of telecentric flat field optics, onto the optical crystal (2).

6. Method according to any of claims 2 to 5, wherein an angle (θ) is set to tilt the beam axis (14) of the laser beam (4) at which angle a platform (7) on which the optical crystal (2) is mounted is aligned relative to a horizontal plane (XY).

7. Method according to any of claims 2 to 6, wherein the laser beam (4) has an elliptical beam profile (15a) of which the aspect ratio (L / B) is selected such that the laser beam (4) aligned at the angle (θ) to the normal direction (14) strikes the surface (2a) with a round beam profile (15b).

8. Method according to any of the preceding claims, wherein, to form a trench (10a-d) in the optical crystal (2), the laser beam (4) and the optical crystal (2) are moved relative to each other multiple times along laterally offset ablation paths (13).

9. Method according to any of the preceding claims, wherein a first trench (10a) and a second trench (10b) are formed in the optical crystal (2), wherein adjacent side walls (11a,b) of the first trench (10a) and of the second trench (10b) have a predetermined distance (A) from each other and form the side walls (11a,b) of a ridge waveguide (8a).

10. Method according to claim 9, wherein, when forming the first and second trench (10a,b), at least along ablation paths (13) which are adjacent to a particular side wall (11a,b) of the ridge waveguide (8a), the beam axis (6) of the laser beam (4) is tilted at an angle (-θ, +θ) to a normal direction of the surface (2a) of the optical crystal (2), which angle is inclined away from the particular side wall (11a,b) of the ridge waveguide (8a).

11. Method according to claim 10, wherein the laser beam (4) is focused onto a focal plane (E) located on the top side (2a) of the optical crystal (2) when forming a particular trench (10a,b).

12. Method according to any of claims 9 to 11, wherein the laser beam (4) and the optical crystal (2) are moved multiple times along one and the same ablation path (13) relative to each other on a side wall (11a,b) of the trench (10a,b), which wall forms a side wall (11a,b) of the ridge waveguide (8a).

13. Method according to any of the preceding claims, wherein the optical crystal (2) is selected from the group comprising: LiNbO$_3$, LiTa, KTP.

14. Method according to any of the preceding claims, wherein the optical crystal (2) has a refractive index structure, in particular designed as LNOI or PELN.

15. Method according to any of the preceding claims, further comprising: supplying a fluid (F) to the surface (2a) of the optical crystal (2) for taking away removed material.

**Revendications**

1. Procédé pour la fabrication d'au moins une microstructure utilisable optiquement sur un cristal optique (2), comprenant:

l'irradiation d'un faisceau laser (4) pulsé sur une surface (2a) du cristal optique (2),
le déplacement du faisceau laser (4) pulsé et du cristal optique (2) l'un par rapport à l'autre le long d'une direction d'avance (12) pour enlever de la matière du cristal optique (2) le long d'au moins une trajectoire d'ablation (13) pour la réalisation de la microstructure utilisable optiquement,
dans lequel
le faisceau laser (4) pulsé est irradié sur la surface (2a) du cristal optique (2) avec des durées d'impulsion (τ) inférieures à 5 ps, de préférence inférieures à 850 fs, de manière particulièrement préférée inférieures à 500 fs, en particulier inférieures à 300 fs, et avec une longueur d'onde (λ$_L$) inférieure à 570 nm, de préférence inférieure à 380 nm,
**caractérisé en ce**
**que**, lors du déplacement du faisceau laser (4) pulsé et du cristal optique (2) l'un par rapport à l'autre, une microstructure utilisable optiquement est réalisée sous la forme d'une structure de guide d'ondes (8a-c), en particulier sous la forme d'un guide d'ondes à moulure, et **que**, lors du déplacement du faisceau laser (4) pulsé et du cristal optique (2) l'un par rapport à l'autre, un axe de faisceau (6) du faisceau laser (4) est incliné selon un angle (θ) par rapport à une direction normale (14) de la surface (2a) du cristal optique (2).

2. Procédé selon la revendication 1, dans lequel l'angle (θ) s'étend dans un plan (XZ) perpendiculaire à la direction d'avance (12).

3. Procédé selon la revendication 2, dans lequel l'angle (θ) est compris entre 2° et 60°, de préférence entre 10° et 45°, de manière particulièrement préférée entre 15° et 30°.

4. Procédé selon l'une des revendications 2 ou 3, dans lequel, pour l'inclinaison de l'axe de faisceau (6) du faisceau laser (4), un angle (θ) est réglé, selon lequel le faisceau laser (4) sort d'une tête d'usinage laser (5), et dans lequel le déplacement du faisceau laser (4) et du cristal optique (2) l'un par rapport à l'autre comprend un coulissement de la tête d'usinage laser (5) et du cristal optique (2) l'un par rapport à l'autre.

5. Procédé selon l'une des revendications 2 à 4, dans lequel, pour l'inclinaison de l'axe de faisceau (6) du faisceau laser (4), un angle (θ) est réglé, selon lequel le faisceau laser (4) sort d'une tête d'usinage laser (5), et dans lequel le déplacement du faisceau laser (4) et du cristal optique (2) l'un par rapport à l'autre est effectué au moyen d'un dispositif de balayage (15), dans lequel le faisceau laser (4) est focalisé sur le cristal optique (2) dans la tête d'usinage laser (5), de préférence au moyen d'une optique télécentrique à champ plan.

6. Procédé selon l'une des revendications 2 à 5, dans lequel, pour l'inclinaison de l'axe de faisceau (14) du faisceau laser (4), un angle (θ) est réglé, selon lequel une plateforme (7) sur laquelle est monté le cristal optique (2) est orientée par rapport à un plan horizontal (XY).

7. Procédé selon l'une des revendications 2 à 6, dans lequel le faisceau laser (4) présente un profil de faisceau elliptique (15a) dont le rapport d'aspect (L / B) est choisi de telle sorte que le faisceau laser (4) orienté selon l'angle (θ) par rapport à la direction normale (14) arrive sur la surface (2a) avec un profil de faisceau circulaire (15b).

8. Procédé selon l'une des revendications précédentes, dans lequel, pour la formation d'une tranchée (10a-d) dans le cristal optique (2), le faisceau laser (4) et le cristal optique (2) sont déplacés l'un par rapport à l'autre plusieurs fois le long de trajectoires d'ablation (13) décalées latéralement.

9. Procédé selon l'une des revendications précédentes, dans lequel une première tranchée (10a) et une seconde tranchée (10b) sont formées dans le cristal optique (2), dans lequel des parois latérales (11a, b) adjacentes de la première tranchée (10a) et de la seconde tranchée (10b) présentent une distance (A) prédéfinie l'une par rapport à l'autre et forment les parois latérales (11a, b) d'un guide d'ondes à moulure (8a).

10. Procédé selon la revendication 9, dans lequel, lors de la formation de la première et de la seconde tranchée (10a, b), au moins le long de trajectoires d'ablation (13) s'étendant de manière adjacente à une paroi latérale (11a, b) respective du guide d'ondes à moulure (8a), l'axe de faisceau (6) du faisceau laser (4) est incliné selon un angle (-θ, +θ) par rapport à une direction normale de la surface (2a) du cristal optique (2) qui est incliné en s'éloignant de la paroi latérale (11a, b) respective du guide d'ondes à moulure (8a).

11. Procédé selon la revendication 10, dans lequel, lors de la formation d'une tranchée (10a, b) respective, le faisceau laser (4) est focalisé sur un plan focal (E) qui est situé sur la face supérieure (2a) du cristal optique (2).

12. Procédé selon l'une des revendications 9 à 11, dans lequel, sur une paroi latérale (11a, b) de la tranchée (10a, b) formant une paroi latérale (11a, b) du guide d'ondes à moulure (8a), le faisceau laser (4) et le cristal optique (2) sont déplacés plusieurs fois l'un par rapport à l'autre le long d'une seule et même trajectoire d'ablation (13).

13. Procédé selon l'une des revendications précédentes, dans lequel le cristal optique (2) est choisi dans le groupe comprenant: $LiNbO_3$, LiTa, KTP.

14. Procédé selon l'une des revendications précédentes, dans lequel le cristal optique (2) présente une structure d'indice de réfraction, en particulier est réalisé en tant que LNOI ou que PELN.

15. Procédé selon l'une des revendications précédentes, comprenant en outre: l'amenée d'un fluide (F) à la surface (2a) du cristal optique (2) pour évacuer la matière enlevée.

Fig. 1

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0803747 A2
- US 20040252730 A1
- US 7057135 B2
- WO 2018019374 A1

### In der Beschreibung aufgeführte Nicht-Patentliteratur

- **T. PIROMJITPONG et al.** High-repetition-rate femtosecond-laser micromachining of low-loss optical-lattice-like-waveguides in lithium niobate. *Proc. of SPIE*, 2018, vol. 10684
- **FENG CHEN**. Optical waveguides in crystalline dielectric materials produced by femtosecond-laser micromachining. *Laser Photonics Rev.*, 2014, vol. 8 (2)
- **L. LI et al.** All-laser-micromachining of ridge waveguides in LiNbO3 crystal for mid-infrared band applications. *Scientific Reports*, 2017, vol. 7, 7034
- **F. HAEHNEL**. Ablation of Lithium Niobate with Pico- and Nanosecond Lasers. *LaserTechnikJournal*, June 2012, vol. 9 (3), 32-35